# EUROPEAN PATENT APPLICATION

(11) **EP 1 398 445 A1**
(43) Date of publication of application: **17.03.2004**
(21) Application number: 03020790.6
(22) Date of filing: 12.09.2003
(51) Int. Cl.: E05F 5/02, B62D 25/12

(54) **Adjustable elastic stop device for a vehicle wing**

(30) Priority: 13.09.2002 IT to20020799
(71) Applicant: Italamec S.r.l., 10128 Torino (IT)
(72) Inventor: Arnoldi, Ernesto Giovanni, 10062 Luserna San Giovanni (IT); Maurino, Paolo Lincoln, 12031 Bagnolo Piemonte (IT)
(74) Representative: Franzolin, Luigi

(57) **Abstract**

An adjustable elastic stop device for a vehicle wing (2), having a supporting body (5) fittable to a vehicle body portion (3); a stop pad (47) having a contact surface (48) cooperating with the wing (2); an intermediate member (34) interposed between the supporting body (5) and the pad (47) and movable with respect to the supporting body (5) along an axis (A) parallel to the direction of movement of the wing (2); and a spring (55) interposed between the pad (47) and the intermediate member (34) to exert on the pad (47) a thrust directed along the axis (A) towards the wing (2); the device (1) has releasable connecting means (31, 38) for connecting the intermediate member (34) axially to the supporting body (5) in a number of stable relative positions; which connecting means (31, 38) are released in response to an axial load exerted by the pad (47) on the intermediate member (34) as a consequence of closure of the wing (2).

## Description

The present invention relates to a stop device for a vehicle wing, in particular a bonnet or tailgate.

As is known, vehicle wings are normally provided with stop devices for elastically supporting the wing at the end of its travel to reduce the noise produced by closure of the wing, and to compensate for gaps between the wing and vehicle body in the closed position.

The most basic types of stop devices are defined by fixed elastic pads, e.g. of elastomeric material.

Stop devices have also been proposed comprising a movable pad spring-loaded against the wing, so that, when the fastening device securing the wing to the vehicle body is released, the elastic force of the spring lifts the wing off the vehicle body to assist manual opening of the wing and, in the case of a bonnet, access to a secondary safety release device.

One drawback of known devices of the type briefly described above lies in the elastic force exerted on the closed wing depending on the size of the gap between the wing and the fixed part of the vehicle body.

Each application therefore calls for a device specially designed according to the size of the gap involved, thus preventing low-cost mass production using the same device for different applications with widely differing gap sizes.

Moreover, even in the case of individual applications, vehicle body part production and assembly tolerances may result in widely varying gap sizes. The elastic reaction on the wing and the thrust exerted on the wing upon release of the fastening device may therefore vary and, in some cases, produce vibration of the wing in use, or poor lift of the wing when the fastening device is released.

Stop devices are also known in which the position of the pad is adjusted automatically the first time the wing is closed. These, however, are normally based on the principle of locking the pad with respect to the vehicle body in a set position, thus normally preventing spring lift of the wing.

It is an object of the present invention to provide an improved elastic stop device enabling spring lift of the wing upon release of the fastening device, but which also permits easy, accurate adjustment of the position of the pad to adapt it to the actual gap between the wing and vehicle body.

It is a further object of the present invention to provide an elastic stop device which is cheap to produce and easy to assemble on the vehicle.

According to the present invention, there is provided a stop device as claimed in Claim 1.

A preferred, non-limiting embodiment of the present invention will be described by way of example with reference to the accompanying drawings, in which:
Figure 1 shows a bottom plan view of a stop device in accordance with the present invention;
Figure 2 shows a section along line II-II of the Figure 1 device in an operating position;
Figure 3 shows a section along line II-II of the device in a preassembly position;
Figure 4 shows a section along line II-II of the device in an adjustment position;
Figure 5 shows a section along line V-V in Figure 1 of the device in the Figure 4 adjustment position;
Figure 6 shows a section along line II-II of the device in a lock position;
Figure 7 shows a partial, schematic, spread-out view of a detail of the device.

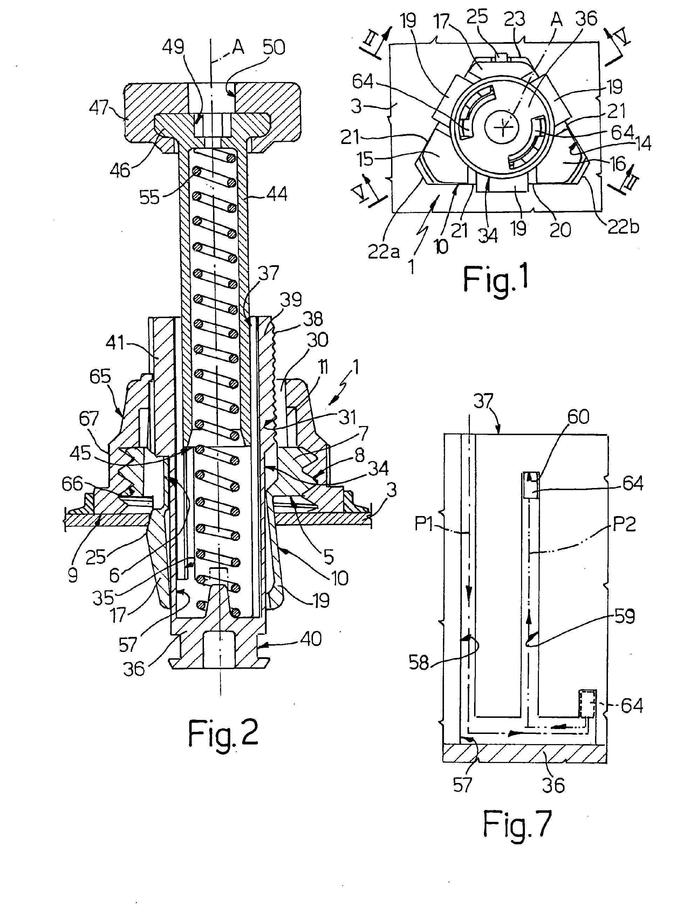

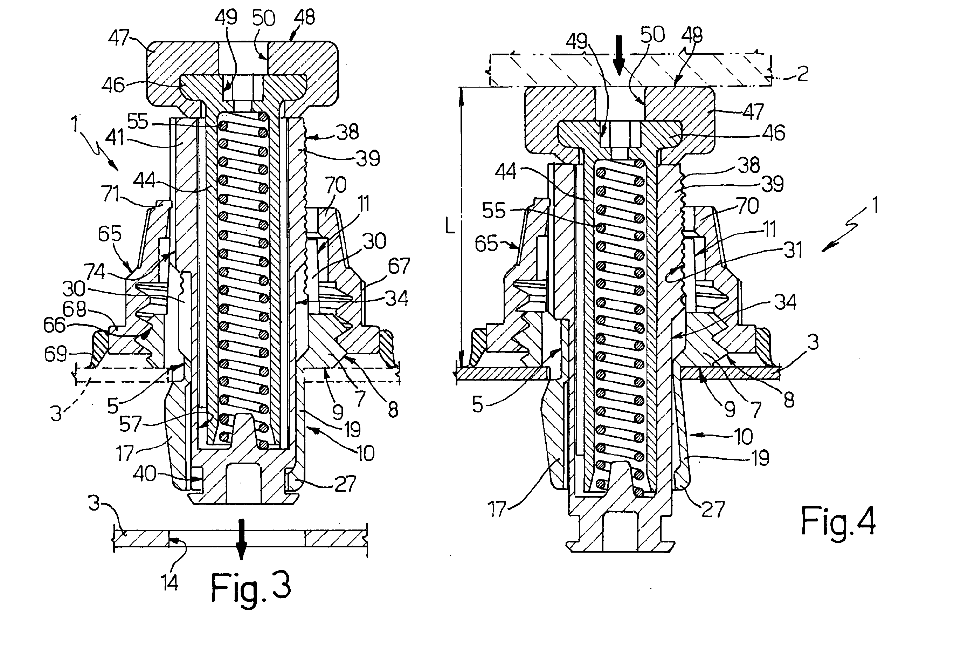

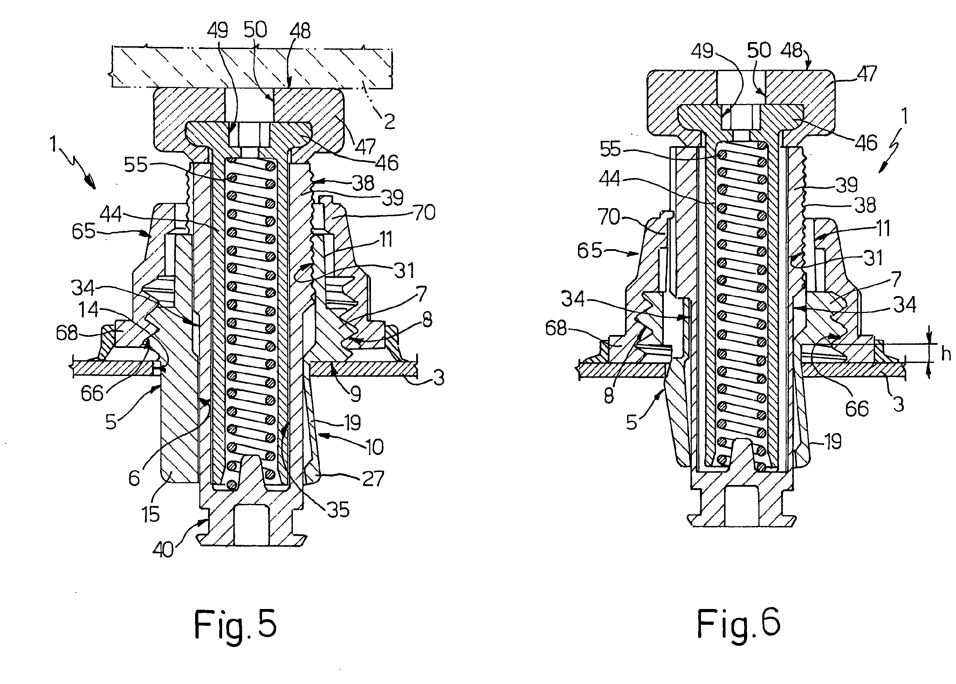

With reference to Figures 1 and 2, number 1 indicates as a whole a stop device for a vehicle wing 2 (shown partly and schematically in Figures 4 and 5); and number 3 indicates a fixed vehicle body portion facing wing 2 and defining a gap L (Figure 4) with the wing when closed.

Device 1 comprises a supporting body 5, of axis A, having an axial cavity 6 and defined by an intermediate annular flange 7 having an external thread 8 and a front supporting surface 9; by a fastening portion 10 extending axially from flange 7 on the front surface 9 side; and by a tubular portion 11 extending axially from flange 7 on the opposite side to fastening portion 10.

Viewed from below, fastening portion 10 (Figure 1) is substantially in the form of a flat-cornered triangle or irregular hexagon to cooperate with a correspondingly shaped hole 14 in vehicle body portion 3, and is defined by three circumferentially spaced appendixes 15, 16, 17 projecting from flange 7 and forming the corners of fastening portion 10, and by three flexible tabs 19 projecting from flange 7 inside the gaps between appendixes 15, 16 and 17.

More specifically, hole 14 comprises an edge 20 (Figure 1) defined by three major sides 21 forming the sides of an ideal equilateral triangle and alternating with three minor sides 22a, 22b, 23 substantially located to "flatten the corners" of the ideal equilateral triangle and so form a hexagon. Minor side 23 is closer to the centre of hole 14 than the other two minor sides 22a, 22b, so as to define an asymmetrical shape and a compulsory angular position in which to insert fastening portion 10 of body 5 inside hole 14.

Two appendixes 15, 16 are substantially rigid, and cooperate in sliding manner, to act as guides and locators, with the major sides 21 of hole 14 close to minor sides 22a and 22b. The third appendix 17 is smaller radially, is housed close to minor side 23 of hole 14, and comprises an outer prefastening tooth 25 which clicks onto side 23 when fastening portion 10 is inserted inside hole 14.

When undeformed, tabs 19 extend axially (Figure 3), and have respective end teeth 27 bent radially towards axis A.

Tubular portion 11 of body 5 has and is made fairly flexible radially by a number of axial slits 30, and has an inner serration 31 (Figure 5) for the purpose described later on.

Device 1 also comprises a tubular intermediate member or sleeve 34 housed inside cavity 6 of body 5, and in turn having a dead inner axial cavity 35 bounded axially by an end wall 36 of sleeve 34 and communicating externally through an opening 37 at the opposite axial end of sleeve 34.

Sleeve 34 has an outer serration 38 extending along an end portion 39 of sleeve 34, at the same end as opening 37, and which cooperates with serration 31 of supporting body 5 to define an adjustable relative axial position.

Sleeve 34 has a circumferential groove 40 extending about end wall 36, and which cooperates with end teeth 27 of tabs 19 of body 5 (Figure 3) to define a stable relative axial preassembly position of body 5 and sleeve 34.

Sleeve 34 has and is connected prismatically to body 5 by an outer longitudinal rib 41 (Figure 3) which engages one of slits 30 in body 5 in sliding manner.

Device 1 also comprises a tubular sliding member 44 housed partly and telescopically inside sleeve 34, and in turn comprising an open end 45 facing end wall 36 of sleeve 34, and an opposite end head 46 fitted with an annular pad 47, which is made of elastomeric material, defines the contact member contacting wing 2, and has, for the purpose, a free surface 48 on the opposite side to sliding member 44. Head 46 has a hexagonal socket seat 49 accessible through an axial hole 50 in pad 47, and for receiving a hexagonal wrench (not shown) by which to rotate sliding member 44 with respect to sleeve 34.

A helical spring 55 is compressed axially between head 46 of sliding member 44 and end wall 36 of sleeve 34 to exert on sliding member 44 an elastic force directed to expel the sliding member from cavity 35 of sleeve 34.

Sleeve 34 comprises diametrically opposite inner seats 57 formed close to end wall 36 and each extending circumferentially by roughly 90°. One of seats 57 is shown schematically in Figure 7, which shows a partial spread-out view of the inside of sleeve 34. Sleeve 34 also comprises two pairs of inner axial grooves 58, 59 communicating with seats 57. More specifically, each seat 57 is associated with a groove 58 terminating at one end of seat 57, and with a seat 59 terminating at an intermediate portion of seat 57. Grooves 58 come out at opening 37 of the sleeve, while grooves 59 terminate a given distance from opening 37 to define respective axial shoulders 60.

Sleeve 34 also comprises two diametrically opposite inner axial seats 61 (Figure 1) parallel to but shorter than grooves 58, 59. Seats 61 communicate with respective seats 57, and come out inside the ends of seats 57 opposite the ends in which grooves 58 come out.

Sliding member 44 has two diametrically opposite outer radial projections 64 (Figure 1), and, using a wrench inside seat 49, can be set to three different angular positions corresponding to projections 64 engaging grooves 58 or 59 or seats 61.

Device 1 also comprises a locking and preloading ring nut 65, of axis A, which is screwed by an internal thread 66 to the external thread 8 of body 5, and comprises a hexagonal turning surface 67; a front flange 68 cooperating with vehicle body portion 3; and a peripheral lip 69 fixed about flange 68 to cooperate hermetically with vehicle body portion 3. Ring nut 65 also comprises an annular end wall 70, at the opposite end to flange 68, of such an inside diameter as to engage tubular portion 11 of body 5 with a small amount of axial clearance.

Operation of device 1 sill be described as of the Figure 3 preassembly position, in which the device is supplied to the vehicle manufacturer for assembly to the vehicle.

In the preassembly position, ring nut 65 is screwed partly to body 5, so that flange 68 of the ring nut is backed up by a predetermined distance h1 with respect to front surface 9 of flange 7 of body 5, and end wall 70 is detached from tubular portion 11 of body 5. The correct relative position between ring nut 65 and body 5 is conveniently indicated by an inner projection 71 on the ring nut engaging an axial groove 74 formed on rib 41 of sleeve 34 (Figure 3) in turn connecting sleeve 34 prismatically to body 5.

Sleeve 34 is inserted inside body 5 in the preassembly axial position defined by teeth 27 of tabs 19 (Figure 3) engaging groove 40 on sleeve 34.

Sliding member 44, which has been inserted inside the sleeve by sliding projections 64 along respective grooves 58 down to seat 57, is bayonet-locked into a preassembly position in which projections 64 of sliding member 44 engage seats 61 (path P1 in Figure 7). The above position, in which pad 47 rests axially on sleeve 34, is made stable by the elastic force of spring 55, which is close to the maximum-compression condition.

Device 1, supplied to the vehicle manufacturer in the above condition, is fitted to the vehicle by simply inserting fastening portion 10 inside hole 14; during which insertion, the third appendix 17 flexes, and tooth 25 clicks onto side 23 of hole 14 to prefasten device 1 to vehicle body portion 3 (position shown by the dash line in Figure 3).

The vehicle wing is then closed (Figure 4) and, on striking pad 47, slides sleeve 34 - by the radial flexibility of tubular portion 11 allowing relative slide of serrations 31 and 38 - into an adjustment position corresponding to the actual size of gap L (figures 4 and 5). The sliding movement of the sleeve expels teeth 27 of tabs 19 from groove 40 on sleeve 34, and the tabs flex outwards to assist in axially locking device 1 to vehicle body portion 3.

Once the adjustment stage is completed - at the end of which, the distance between surface 48 of pad 47 and vehicle body portion 3 equals gap L - wing 2 is opened, and device 1 is locked in a preload position by turning ring nut 65 from the Figure 3-5 position to the Figure 6 position.

During a first part of its rotation, the ring nut is screwed to thread 8 of body 5 and arrested axially on vehicle body portion 3; and, during the final part of its rotation, ring nut 65 is prevented from advancing any further, so that body 5 is raised with respect to vehicle body portion 3 by a predetermined amount h shown clearly in Figure 6 as the distance between flange 7 of body 5 and vehicle body portion 3. Tubular portion 11 of body 5 radially engages end wall 70 of ring nut 65, which prevents radial expansion of the tubular portion, and therefore relative slide of serrations 31 and 38, thus rigidly connecting sleeve 34 to body 5.

At the end of the locking stage, the distance between surface 48 of pad 47 and vehicle body portion 3 equals L+h.

Finally, device 1 is set for use by rotating sliding member 44, by means of the wrench not shown, so that projections 64 slide inside respective grooves 59 (path P2 in Figure 7), and sliding member 44 is pushed outwards by spring 55 into a stop position defined by projections 64 contacting shoulders 60.

In actual use, when closed, wing 2 strikes pad 47 to withdraw sliding member 44 inside the sleeve in opposition to the elastic reaction of spring 55. Pad 47 is arrested on sleeve 34, as explained above, when the distance between wing 2 and vehicle body portion 3 equals L+h; the sleeve is locked rigidly inside body 5 by ring nut 65, so that, during the final travel portion of length h, pad 47 is compressed elastically by wing 2. The wing is arrested at a distance L from vehicle body portion 3, so that pad 47, in use, is kept compressed by amount h.

The wing is maintained in the closed position by a fastening device not shown.

When the fastening device is released, wing 2 is pushed up by the preload of pad 47 and the reaction of spring 55.

The push exerted on the wing is of predetermined intensity, by the degrees of compression of spring 55 and pad 47 being determined, at the adjusting and locking stages of device 1 respectively, independently of the actual size of gap L between the closed wing 2 and vehicle body portion 3.

The advantages of device 1 according to the invention will be clear from the foregoing description.

In particular, while permitting spring lift of the wing, device 1 provides for easy, accurate adjustment of the pad position to the actual gap between the wing and vehicle body.

The device can therefore be used for different applications involving different design dimensions of the gap between the wing and vehicle body. Moreover, even in individual applications, the dimensional and assembly tolerances of the fixed vehicle body part and the wing are automatically compensated to achieve a constant elastic force on the wing.

Moreover, the device according to the invention is cheap and easy to produce and easy to assemble to the vehicle.

Clearly, changes may be made to device 1 as described herein without, however, departing from the scope of the accompanying Claims.

In particular, supporting body 5 may be fastened differently to the vehicle body; and movement of the supporting body, with respect to the vehicle body, from the adjustment position to the preload position may be effected differently, e.g. by means of a cam device.

Finally, device 1 may be carried by the wing as opposed to a fixed vehicle body part.

## Claims

1. An elastic stop device interposable between a first and a second vehicle body portion (3, 2) movable with respect to each other between at least a relative open position, and a relative closed position in which said vehicle body portions form between them a gap (L), the device (1) comprising a supporting body (5) fittable to said first vehicle body portion (3) in an assembly position; a stop pad (47) having a contact surface (48) cooperating with said second vehicle body portion (2) in said relative closed position of said vehicle body portions (3, 2), said pad (47) being movable along an axis (A) parallel to a relative movement direction of said vehicle body portions; and elastic means (55) interposed between said supporting body (5) and said pad (47) to exert on said pad (47) a thrust directed along said axis (A) towards said second vehicle body portion (2) ;
**characterized by** comprising an intermediate member (34) interposed between said supporting body (5) and said pad (47) and movable with respect to the supporting body (5) along said axis (A), said elastic means (55) being interposed between said intermediate member (34) and said pad (47); and by comprising releasable first connecting means (31, 38) for connecting said intermediate member (34) axially to said supporting body (5) in at least one number of stable relative positions; said first connecting means (31, 38) being released in response to an axial load exerted by said pad (47) on said intermediate member (34) as a consequence of relative movement between said vehicle body portions (2, 3).

2. A device as claimed in Claim 1, **characterized by** comprising second connecting means (8, 66) acting between said first vehicle body portion (3) and said supporting body (5) to move said supporting body (5) along said axis (A) and towards said second vehicle body portion (2) from said assembly position to a lock position.

3. A device as claimed in Claim 2, **characterized by** comprising locking means (70) for preventing release of the first connecting means (31, 38) in said lock position of said supporting body (5).

4. A device as claimed in Claim 3, **characterized in that** said second connecting means (8, 66) and said locking means (70) are activated by a single ring nut (65) coaxial with said supporting body (5).

5. A device as claimed in Claim 4, **characterized in that** said second connecting means comprise a thread (66) of said ring nut (65) engaging a corresponding thread (8) of said supporting body (5); and prismatic connecting means (41, 30) for prismatically connecting said ring nut (65) and said supporting body (5).

6. A device as claimed in any one of the foregoing Claims, **characterized in that** said first connecting means comprise respective serrations (38, 31) formed on said intermediate member (34) and on a portion (11), deformable elastically under said axial load, of said supporting body (5).

7. A device as claimed in Claim 6, **characterized in that** said locking means comprise a portion (70) of said ring nut (65), which cooperates with said deformable portion (11) of said supporting body (5) to prevent deformation of the deformable portion in said lock position of said supporting body (5).

8. A device as claimed in Claim 7, **characterized in that** said elastically deformable portion (11) is a tubular portion of said supporting body (5), and has an inner serration (31); said intermediate member being a sleeve (34) having an outer serration (38); and said supporting body (5) and said sleeve (34) being coaxial with each other and with said axis (A).

9. A device as claimed in Claim 8, **characterized in that** said pad (47) is fitted to a sliding member (44) internally coaxial with said sleeve (34) and connectable to the sleeve by bayonet connecting means (64; 57, 58, 59, 61).

10. A device as claimed in Claim 9, **characterized in that** said bayonet connecting means (64; 57, 58, 59, 61) define a number of different axial connection modes of said sliding member (44); said connection modes being activated selectively by rotation of said sliding member (44) about said axis (A) .

11. A device as claimed in Claim 10, **characterized in that** said bayonet connecting means (64; 57, 58, 59, 61) define a first connection mode, corresponding to a first angular position of said sliding member (44), in which said sliding member (44) is axially free with respect to, and insertable inside, said sleeve (34); a second connection mode, corresponding to a second angular position of said sliding member (44), in which said sliding member (44) is substantially locked inside said sleeve, with said pad (47) resting axially on the sleeve (34); and a third connection mode, corresponding to a third angular position of said sliding member (44), in which said sliding member (44) is axially free but prevented by stop means (60) from being expelled from said sleeve (34).
